# EUROPÄISCHE PATENTSCHRIFT

(11) **EP 1 767 087 B1**
(45) Veröffentlichungstag und Bekanntmachung des Hinweises auf die Patenterteilung: **14.10.2009**
(21) Anmeldenummer: 06019873.6
(22) Anmeldetag: 22.09.2006
(51) Int. Cl.: A01K 5/00, B01F 7/00

(54) **Befestigungsanordnung einer Messerklinge an einer Mischschnecke eines Futtermischwagens**
Knife blade fastening arrangement for a mixing screw in a fodder mixing wagon
Dispositif de fixation d'une lame d'un vis de mélange pour un chariot mélangeur de fourrage

(30) Priorität: 27.09.2005 DE 10546043
(43) Veröffentlichungstag der Anmeldung: 28.03.2007
(73) Patentinhaber: Frielinghaus GmbH, 58256 Ennepetal (DE)
(72) Erfinder: Braun, Wolfgang, 58256 Ennepetal (DE); Braun, Stefan, 58256 Ennepetal (DE)
(74) Vertreter: Rehberg Hüppe + Partner

(56) Entgegenhaltungen:
- EP-A- 0 958 735
- EP-A2- 0 865 727
- US-A- 5 395 286
- US-A- 5 601 362

## Beschreibung

Die Erfindung betrifft eine Befestigungsanordnung für eine Messerklinge an einer Mischschnecke eines Futtermischwagens. Die Befestigungsanordnung weist als wesentliche Bestandteile eine Messerklinge und eine Unterstützungsplatte auf. Diesen beiden Elementen sind Schrauben für eine Schraubverbindung zugeordnet. Die Unterstützungsplatte hat die Aufgabe, die Messerklinge in montiertem Zustand abzustützen und damit zu versteifen. Die Unterstützungsplatte ist über mehrere Schrauben drehfest mit dem Rand der Mischschnecke, also der Wendel der Mischschnecke, verbunden. Die Befestigungsanordnung für die Messerklingen an der Mischschnecke eines Futtermischwagens kann sowohl bei Mischschnecken mit horizontal angeordneten Achsen, sowie insbesondere bei Mischschnecken mit vertikal angeordneten Achsen angewendet werden. Solche Mischschnecken mit vertikal angeordneten Achsen besitzen einen vergleichsweise größeren Durchmesser, der sich im Übrigen von unten nach oben verringert. Der Begriff "Futtermischwagen" ist hier sehr weit gefasst und nur beispielhaft zu verstehen. Er soll auch andere Anwendungen mit umfassen. Es kann sich beispielsweise auch um eine stationäre Anlage handeln, bei der im Rahmen einer Biogasanlage Strohballen zerkleinert werden.

Eine Befestigungsanordnung der eingangs beschriebenen Art für die Messerklingen an einer Mischschnecke eines Futtermischwagens ist bekannt. Der Rand der Mischschnecke, also der Rand der Förderschnecke, ist in entsprechenden Abständen mit Durchbrechungen versehen. Im Bereich jeder einzelnen zu lagernden Messerklinge sind mehrere Durchbrechungen für eine drehfeste Verbindung angeordnet. Die Messerklinge und die zugeordnete Unterstützungsplatte besitzen Durchbrechungen mit gleichem oder ähnlichem Lochbild, so dass die Teile über mehrere Schrauben drehfest miteinander verbunden werden können. Bei einer Mischschnecke mit vertikal angeordneter Achse bildet der Rand der Mischschnecke den obersten Teil. Die Messerklinge wird unter den Rand der Mischschnecke geschoben. Unterhalb der Messerklinge wird die Unterstützungsplatte angeordnet, und es wird eine Schraubenverbindung aus mehreren Schrauben eingesetzt, die sämtliche drei Teile mit den insoweit fluchtenden Durchbrechungen durchsetzt. Die Unterstützungsplatte kann eine Dicke von etwa 10 bis 15 mm aufweisen, während die Messerklinge im Allgemeinen eine Dicke von 5 bis 6 mm besitzt. während die Mischschnecke eine Dicke von 8 bis 10 mm aufweist. Die Unterstützungsplatte hat die Aufgabe, die vergleichsweise dünne Messerklinge zu verstärken bzw. abzustützen, damit sich diese bei auftretenden Belastungen nicht verbiegt und insoweit den Beanspruchungen in einem Futtermischwagen beim Mischen gerecht wird.

Die bekannte Befestigungsanordnung baut relativ hoch auf, da sich die Dicken der Förderwendel, der Messerklinge und der Unterstützungsplatte addieren. Diese Konstruktion erfordert für ihren Antrieb beim Mischen einen relativ hohen Leistungsbedarf, weil beim Durchdringen des Mischguts erhebliche Kräfte aufzubringen sind. Die Messerklinge und die Unterstützungsplatte weisen an weiteren Stellen miteinander fluchtende Durchbrechungen auf, die ebenfalls mit einer Schraubverbindung gehalten werden. Diese Schraubverbindung ist außerhalb der Projektion der Förderschnecke angeordnet. Damit ergibt sich insgesamt eine entsprechend aufwendige Befestigungsanordnung. Die bekannte Konstruktion setzt weiterhin voraus, dass die Messerklingen relativ groß und damit ebenfalls relativ teuer ausgebildet sein müssen, da sie in der Projektion einen Teil des Rands der Mischschnecke und die Unterstützungsplatte überdecken und außerdem radial nach außen frei abragen müssen.

### STAND DER TECHNIK

Aus der EP 0 865 727 B1 ist eine Klinge für eine Mischschnecke an einem Futtermischwagen bekannt, die ohne Unterstützungsplatte auskommt und bei der die Messerklinge aus einem flachen, weitgehend ebenen Grundkörper aus Stahl besteht, der mindestens eine der Befestigung im Randbereich der Mischschnecke dienende Durchbrechungen und mindestens eine Schneide aufweist. Die Messerklinge kann in ihrem Schneidenbereich eine besonders hohe Härte aufweisen, wobei trotz der Befestigung an der Mischschnecke nicht die Gefahr des Bruchs der Schneide besteht. Dies ist darauf zurückzuführen, dass der an sich ebene Grundkörper der Messerklinge über drei Auflager an der gewölbten Oberfläche der Mischschnecke aufgelagert ist, so dass die Messerklinge von Biegekräften freigehalten wird.

Aus der US 5,601,362 ist ein Futtermischwagen mit einer Mischschnecke mit vertikal angeordneter Welle bekannt. Mit dem Rand der Wendel der Mischschnecke sind Messerklingen ohne Einsatz von Unterstützungsplatten verbunden, die radial über den Umfang der Wendel vorstehen und dazu dienen, einen Futterballen zu zerkleinern. Die Aufbauhöhe in axialer Richtung an dieser Stelle ergibt sich aus der Summe der Dicken der Wendel und der Messerklinge. Außerdem weist die Mischschnecke noch eine Reihe weiterer Elemente auf. Es sind erste und zweite Abweiser vorgesehen, die sich einerseits in Umfangsrichtung der Wendel und andererseits axial in Richtung der Welle der Mischschnecke erstrecken und dazu dienen, in Anpassung an die Wandung des Futtermischwagens Futter radial nach innen in Richtung auf die Welle zu bewegen. Mit den sich axial erstreckenden Teilen der Abweiser können Klingen verschraubt sein, die die Aufbauhöhe in axialer Richtung erheblich anheben und damit den Kraft- und Leistungsbedarf für den Antrieb der Mischschnecke in ungünstiger Weise vergrößern.

### AUFGABE DER ERFINDUNG

Der Erfindung liegt die Aufgabe zugrunde, eine Befestigungsanordnung für eine Messerklinge an einer Mischschnecke eines Futtermischwagens bereitzustellen, die sich durch einen vergleichsweise reduzierten Kraft- und Leistungsbedarf für ihren Antrieb während des Mischens auszeichnet.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Messerklinge ist direkt ausschließlich mit der Unterstützungsplatte drehfest verbunden, nicht aber zugleich mit dem Rand der Mischschnecke. Anders gesagt ist es nur die Unterstützungsplatte, die direkt mit dem Rand der Mischschnecke verschraubt ist, während andererseits die Messerklinge wiederum mit der Unterstützungsplatte, nicht aber direkt mit der Mischschnecke drehfest verbunden ist. Insoweit ergibt sich eine indirekte Befestigung der Messerklinge an dem Rand der Mischschnecke. Die drehfeste Verbindung wird in der Regel durch mehrere Schrauben herbeigeführt, wobei es eine erste Verbindung mit mehreren Schrauben gibt, die den Rand der Mischschnecke und die Unterstützungsplatte durchsetzt, während an einer zweiten Verbindungsstelle die Messerklinge mit der Unterstützungsplatte mit Hilfe mehrerer Schrauben drehfest befestigt ist. Den Schrauben können Muttern zugeordnet sein. Es ist aber auch möglich, ohne Muttern auszukommen und in der Unterstützungsplatte Gewindelöcher vorzusehen. In all diesen Fällen wird es möglich, die einzusetzenden Messerklingen erheblich kleiner auszubilden als im Stand der Technik, so dass sie preiswerter hergestellt und in Verkehr gebracht werden können. Die Messerklingen können als Segment ausgebildet sein und damit nur einen relativ kleinen Befestigungsstreifen für ihre Befestigung an der Unterstützungsplatte aufweisen, ansonsten aber die Schneide an jeder Messerklinge darstellen. An einer Schnittstelle können auch mehrere Segmente einer Unterstützungsplatte zugeordnet sein. Dabei ergibt sich auch die Möglichkeit, die Segmente mit unterschiedlich ausgebildeten Schneiden gezielt so einzusetzen, wie es für die zu erbringende Funktion optimal ist. Durch die indirekte Verbindung zwischen Messerklinge und Rand der Mischschnecke über die Unterstützungsplatte besteht die Möglichkeit, dass eine Relativanordnung gewählt wird, bei der sich der Rand der Förderschnecke und die Messerklinge auf der gleichen Seite der Unterstützungsplatte befinden. Damit wird erreicht, dass die Aufbauhöhe erheblich reduziert wird, was zu einer Reduzierung des Leistungs- und Kraftbedarfs für den Antrieb der Mischschnecke mit den Messerklingen führt. Auch die Verwendung von Schrauben ohne Muttern, also in Verbindung mit Gewindelöchern, wirkt sich in diesem Sinne vorteilhaft aus. Die Messerklingen können weiterhin eine im Vergleich zum Stand der Technik etwas erhöhte Dicke aufweisen und/oder sogar mit Verstärkungsprägungen versehen sein, ohne dass damit die Gesamthöhe des Aufbaus vergrößert würde. Dies ist insbesondere dann der Fall, wenn die als Segment ausgebildete Messerklinge eine geringere Dicke als der Rand der Mischschnecke aufweist.

Für alle Ausführungsformen gilt der Vorteil der preiswerten Herstellung der Messerklingen bzw. Segmente, bedingt durch das vergleichsweise kleinere Materialgewicht. Dies wirkt sich bei steigenden Stahlpreisen deutlich aus. Ein weiterer wesentlicher Vorteil ist in einem erleichterten Auswechseln zu sehen. Wenn ein Futtermischwagen mit neuen Messerklingen bestückt wird, ist es nicht mehr erforderlich, die Verbindung der Unterstützungsplatten zum Rand der Mischschnecke zu lösen, sondern lediglich die Verbindung der Messerklingen zu den Unterstützungsplatten. Es müssen nicht mehr die schweren Unterstützungsplatten, sondern nur noch die relativ leichten Messerklingen bzw. Segmente gehandhabt werden.

Es ist auch möglich, dass die Unterstützungsplatte auf ihrer der Messerklinge abgekehrten Seite eine Anschrägung aufweist. Die Anschrägung ist zweckmäßig relativ zur Formgebung der Schneide ausgebildet und angeordnet, so dass von diesen Elementen ein radial von innen nach außen abnehmender konischer oder jedenfalls abgeflachter Querschnitt zur Verfügung gestellt wird, bei dessen Durchschneiden durch das Futter der angestrebte geringere Leistungsbedarf entsteht. Eine derart ausgebildete Befestigungsanordnung mit Messerklinge und Unterstützungsplatte weist einen erheblich verringerten Widerstand auf, wenn die Mischschnecke zum Mischen von Futter betrieben wird.

Um darüber hinaus die Messerklinge mit der Unterstützungsplatte drehfest zu verbinden, können wiederum mehrere Schrauben vorgesehen sein, die ausschließlich die Messerklinge und die Unterstützungsplatte durchsetzen. Es ist aber auch an dieser Stelle möglich, auf nur eine einzige Schraube an diese Stelle zurückzugreifen und die drehfeste Verbindung durch andere Mittel zu erreichen, beispielsweise durch einen ausgeprägten Noppen, der gleichsam neben der einzigen Schraube einen weiteren Befestigungspunkt bildet.

Weiterhin ergibt sich vorteilhaft die Möglichkeit, dass die als Segment ausgebildete Messerklinge ein- oder mehrteilig ausgebildet sein kann. Insbesondere bei mehrteiliger Ausbildung ergeben sich relativ klein gestaltete Elemente, die als Serienteil mit entsprechend hohen Stückzahlen kostengünstig hergestellt werden können. Andererseits besteht dabei die Möglichkeit, die Schneiden der einzelnen Segmente unterschiedlich auszubilden, um auf das Anschneiden und das Durchschneiden des Futters gezielt Einfluss zu nehmen.

Die Messerklinge kann auf der der Unterstützungsplatte abgekehrten Seite eine Schneidwate aufweisen. Dies ist besonders sinnvoll in Verbindung mit der Anordnung der Anschrägung auf der entsprechenden anderen Seite der Unterstützungsplatte, so dass im Querschnitt gesehen sich radial von innen nach außen ein sich verjüngender kleinerer Querschnitt ergibt.

Eine andere sinnvolle Formgestaltung für geringen Leistungsbedarf liegt dann vor, wenn die Messerklinge in ihrem freien Schneidbereich eine zur Unterstützungsplatte gerichtete Umbiegung aufweist und auf der der Unterstützungsplatte zugekehrten Seite dann die Schneidwate platziert wird. Besonders vorteilhaft ist es, wenn die Schneide in Form von Zähnen geprägt wird, also gleichsam auf der konvexen Seite der Umbiegung. Die geschliffene Schneidwate wird dann parallel zur wesentlichen Erstreckungsebene der Förderschnecke angeordnet. Die Messerklinge kann eine bogenförmig verlaufende Schneidkante aufweisen. Mit besonderem Vorteil besitzt die Messerklinge in ihrem Schneidbereich jedoch eine Mehrzahl Schneidzähne, deren Oberseite geprägt und deren Unterseite geschliffen ist. Die oben beschriebene Umbiegung kann auch im Bereich der Schneidzähne angeordnet sein, also einen relativ weit außen radial gelegenen Bereich der Messerklinge erfassen.

In der beschriebenen Relativanordnung trägt die Dicke der Messerklinge zur Aufbauhöhe nichts bei, weil die Aufbauhöhe durch die Summe des Rands der Förderschnecke und der Dicke der Unterstützungsplatte festgelegt ist. Insoweit eröffnet sich auch vorteilhaft die Möglichkeit, die Messerklinge durch ein oder mehrere Verstärkungsprägungen zusätzlich zu versteifen.

Vorteilhafte Weiterbildungen der Erfindung ergeben sich also aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Querschnitt durch die Befestigungsanordnung in einem ersten Ausführungsbeispiel.
- **Fig. 2**: zeigt eine zweite Ausführungsform der Befestigungsanordnung im Querschnitt.
- **Fig. 3**: zeigt eine dritte Ausführungsform im Querschnitt.
- **Fig. 4**: zeigt eine Draufsicht auf eine Ausführungsform der Befestigungsanordnung ähnlich Fig. 2.
- **Fig. 5**: zeigt schließlich eine Draufsicht ähnlich Fig. 4 an einer weiteren Ausführungs- form.

### FIGURENBESCHREIBUNG

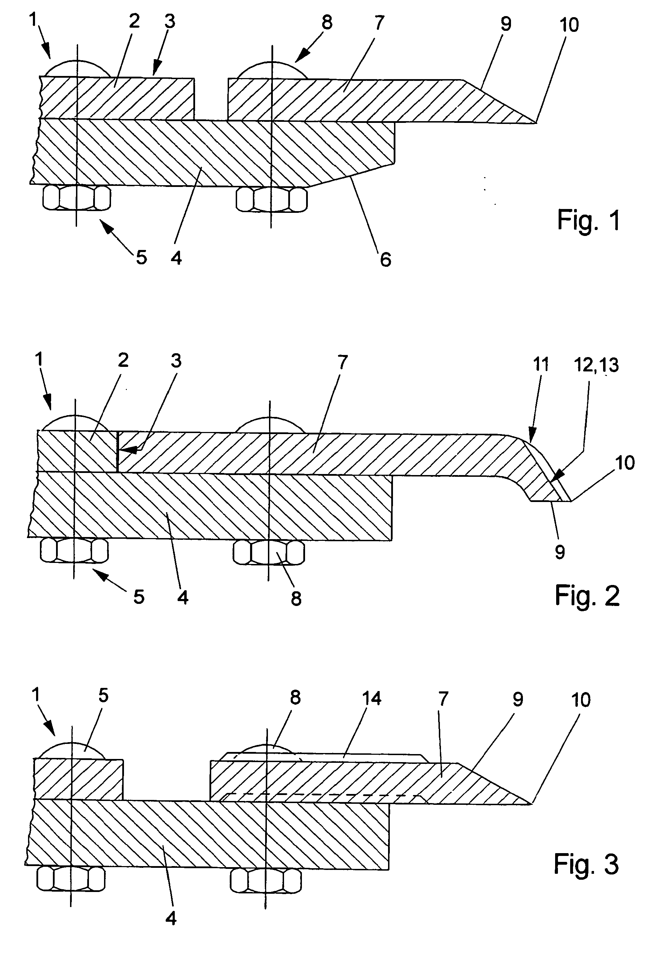

**Fig. 1** zeigt nur den Randbereich einer Mischschnecke 1. Die Mischschnecke 1 weist eine Wendel 2 auf, deren Rand 3 entsprechend dem Radius der Wendel 2 endet. Unter den Rand 3 der Wendel 2 ist eine Unterstützungsplatte 4 geschraubt. Es versteht sich, dass hier eine Schraubverbindung mit vorzugsweise mindestens zwei Schrauben 5 für eine drehfeste Verbindung vorgesehen ist. Die Schraubverbindung ist nur schematisch angedeutet. Es versteht sich, dass der Rand 3 der Wendel 2 und die Unterstützungsplatte 4 entsprechende fluchtende Durchbrechungen aufweisen, durch die jeweils eine Schraube 5 hindurchgeführt und mit Hilfe einer Mutter festgezogen werden kann, so dass die Unterstützungsplatte 4 damit ihren drehfesten unverrückbaren, aber gegebenenfalls lösbaren Sitz an dem Rand 3 der Wendel 2 der Mischschnecke 1 erhält. Es ist auch möglich, auf die Verwendung von Muttern zu verzichten und die Schrauben in Gewindelöcher in der Unterstützungsplatte 4 oder im Rand der Förderschnecke eingreifen zu lassen. Dies trägt zur Verringerung der Bauhöhe bei. Die Unterstützungsplatte 4 ist so ausgebildet und angeordnet, dass sie radial nach außen über den Rand 3 der Wendel 2 überragt. Im Bereich ihres radial äußeren freien Endes kann die Unterstützungsplatte 4 mit einer Anschrägung 6 versehen sein. In diesem Bereich ist auch eine Messerklinge 7 angeordnet, die die Aufbauhöhe nicht vergrößert. Für die direkte Befestigung zwischen Messerklinge 7 und Unterstützungsplatte 4 in drehfester Relativanordnung sind zweckmäßig wieder mehrere Schrauben 8 vorgesehen, die entsprechende fluchtende Durchbrechungen (nicht dargestellt) in der Messerklinge 7 und in der Unterstützungsplatte 8 durchsetzen. Es kann auch an dieser Verbindungsstelle auf die Verwendung von Muttern verzichtet werden. Die Schrauben 8 greifen dann in Gewindelöcher in der Unterstützungsplatte 4 ein. An jeder der beiden Befestigungsstellen ist mindestens eine Schraube 5 bzw. 8 erforderlich. In der Regel und bei einfacher Ausführungsform sind dies jeweils zwei oder drei Schrauben 5 bzw. 8.

Die Messerklinge 7 besitzt flächenmäßig einen erheblich kleineren Umriss als dies im Stand der Technik erforderlich ist, weil die Messerklinge 7 in radialer Richtung wesentlich kleiner bemessen ist als Messerklingen aus dem Stand der Technik. Die einzelne Messerklinge 7 lässt sich damit preiswerter herstellen und einfacher handhaben, beispielsweise austauschen. Die Messerklinge 7 besteht aus einem im Wesentlichen ebenen Abschnitt aus Stahl. Sie kann einen gehärteten Randbereich aufweisen, wobei radial außen über eine geschliffene Schneidwate 9 eine Schneide 10 gebildet ist. Die Neigung der Schneidwate 9 kann auf die Neigung der Anschrägung 6 an der Unterstützungsplatte abgestimmt sein, so dass sich radial von innen nach außen ein sich verjüngender, aufeinander abgestimmter Querschnittsverlauf ergibt, der für einen geringen Leistungsbedarf für den Antrieb der Mischschnecke sinnvoll ist.

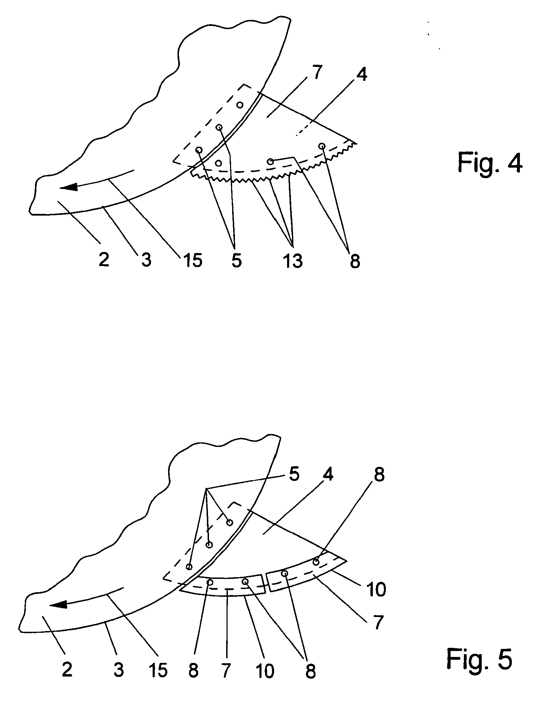

**Fig. 2** zeigt ein weiteres Ausführungsbeispiel der Befestigungsanordnung, welches hinsichtlich der Befestigung zwischen dem Rand 3 der Wendel 2 und der Unterstützungsplatte 4 mit dem Ausführungsbeispiel der Fig. 1 übereinstimmt. Die Unterstützungsplatte 4 weist hier keine Anschrägung 6 auf, wenngleich natürlich eine solche Anschrägung auch bei diesem Ausführungsbeispiel vorgesehen sein könnte. Die Messerklinge 7 ist hier etwas größer ausgebildet, d. h. sie besitzt eine Formgebung, die entweder über den entsprechenden Umfangsbereich dem Verlauf des Rands 3 der Wendel 2 folgt, wie dies beispielsweise anhand des Ausführungsbeispiels der Fig. 4 dargestellt ist. Es ist aber auch möglich, die Gestaltung so zu treffen, dass nur ein weiterer Abstützpunkt für eine drehfeste Verbindung realisiert wird.

Am freien Rand weist die Messerklinge 7 eine Umbiegung 11 auf, die in Richtung auf die Unterstützungsplatte 4 geformt und angeordnet ist. Die Umbiegung weist auf ihrer Oberseite eine Prägung 12 auf, durch die eine Reihe von Zähnen 13 gebildet wird. Auf der der Prägung 12 gegenüberliegenden Seite, also unten, ist die Schneidwate 9 angeschliffen, die in der wesentlichen Erstreckungsebene der Unterstützungsplatte 4 bzw. parallel dazu liegt. Auch auf diese Weise wird ein sich radial nach außen verjüngender Querschnitt geschaffen, wie es für einen geringen Leistungsbedarf zum Antrieb der Mischschnecke sinnvoll ist.

**Fig. 3** zeigt ein weiteres Ausführungsbeispiel der Befestigungsanordnung, welches auf dem Ausführungsbeispiel der Fig. 1 aufbaut. Die Messerklinge 7 ist jedoch durch eine oder mehrere Verstärkungsprägungen 14 verstärkt, so dass unter Umständen eine geringere Dicke der Messerklinge 7 ausreicht, um den Stabilitätsanforderungen unter Langzeiteinsatz Genüge zu tun. Die Höhe der Messerklinge 7 einschließlich der Verstärkungsprägungen 14 kann immer noch geringer sein als die Dicke des Rands 3 der Wendel 2.

**Fig. 4** und 5 zeigen Draufsichten von oben, also auf einen Teil des Rands 3 der Wendel 2. Es versteht sich, dass eine Mischschnecke eine Mehrzahl solcher Befestigungsanordnungen bzw. Befestigungsstellen für jeweils eine Messerklinge 7 aufweist. Die in **Fig. 4** dargestellte Messerklinge 7 besitzt eine flächenmäßige Begrenzung, die an den Rand 3 der Wendel 2 angepasst ist. Es ist auch möglich, zur drehfesten Abstützung nur eine punkt- bzw. linienförmige Anlage zwischen der Messerklinge 7 und dem Rand 3 der Wendel 2 zu bilden. Es versteht sich, dass die Wendel 2 in Richtung eines Pfeils 15 drehend angetrieben wird. Auf dem die Schneide 10 bildenden äußeren Umfang der Messerklinge 7 sind die einzelnen Zähne 13 erkennbar. Symbolhaft sind auch hier die Schrauben 5 und 8 angedeutet. Die Unterstützungsplatte 4 liegt unter der Messerklinge 7 bzw. auch unter dem Rand 3 der Wendel 2.

**Fig. 5** zeigt eine ähnliche Darstellung wie Fig. 4. Die Messerklinge 7 ist hier zweiteilig ausgebildet und besteht aus zwei Segmenten, die einander ergänzen. Es können auch z. B. drei Segmente vorgesehen sein. Es ergibt sich auch die Möglichkeit, die Scheiden der einzelnen Segmente unterschiedlich zu gestalten. Die insgesamt die Messerklinge 7 bildenden Segmente sind wiederum direkt mit der Unterstützungsplatte 4 über die Schrauben 8 verbunden, während die Unterstützungsplatte 4 über die Schrauben 5 direkt mit dem Rand 3 der Wendel 2 in drehfester Verbindung steht.

Bei allen Ausführungsformen ist erkennbar, dass die verschiedenen Möglichkeiten nur eine geringe Bauhöhe aufweisen, wie es für einen geringen Leistungsbedarf für den Antrieb der Mischschnecke 1 erforderlich ist. Im Übrigen ist die Umrissgestaltung im Querschnitt und in der Draufsicht so aufeinander abgestimmt, dass dies einem geringen Leistungsbedarf ebenfalls förderlich ist.

### BEZUGSZEICHENLISTE

- 1: Mischschnecke
- 2: Wendel
- 3: Rand
- 4: Unterstützungsplatte
- 5: Schraube
- 6: Anschrägung
- 7: Messerklinge
- 8: Schraube
- 9: Schneidwate
- 10: Schneide
- 11: Umbiegung
- 12: Prägung
- 13: Zahn
- 14: Verstärkungsprägung

## Patentansprüche

1. Befestigungsanordnung einer Messerklinge (7) an einer Mischschnecke (1) eines Futtermischwagens, mit einer die Messerklinge (7) abstützenden Unterstützungsplatte (4), die über mehrere Schrauben (5) drehfest mit dem Rand (3) einer Wendel (2) der Mischschnecke (1) so verbunden ist, dass sie radial nach außen über den Rand (3) der Wendel (2) der Mischschnecke (1) überragt, **dadurch gekennzeichnet, dass** die Messerklinge (7) über mindestens eine Schraube (8) ausschließlich mit dem radial nach außen über den Rand (3) der Wendel (2) überragenden Bereich der Unterstützungsplatte (4) drehfest verbunden und dabei ohne Vergrößerung der Aufbauhöhe relativ zu der Unterstützungsplatte (4) auf der gleichen Seite wie der Rand (3) der Mischschnecke (1) angeordnet ist.

2. Befestigungsanordnung nach Anspruch 1, **dadurch gekennzeichnet, dass** die Messerklinge (7) als Segment ausgebildet ist.

3. Befestigungsanordnung nach Anspruch 2, **dadurch gekennzeichnet, dass** die als Segment ausgebildete Messerklinge (7) eine geringere Dicke als der Rand (3) der Mischschnecke (1) aufweist.

4. Befestigungsanordnung nach mindestens einem der Ansprüche 1 bis 3 , **dadurch gekennzeichnet, dass** die Unterstützungsplatte (4) auf ihrer der Messerklinge (7) abgekehrten Seite eine Anschrägung (6) aufweist.

5. Befestigungsanordnung nach mindestens einem der Ansprüche 1 bis 4, **dadurch gekennzeichnet, dass** die Messerklinge (7) über mehrere Schrauben (8) ausschließlich mit der Unterstützungsplatte (4) drehfest verbunden ist.

6. Befestigungsanordnung nach mindestens einem der Ansprüche 1 bis 5, **dadurch gekennzeichnet, dass** die als Segment ausgebildete Messerklinge (7) ein- oder mehrteilig ausgebildet ist.

7. Befestigungsanordnung nach mindestens einem der Ansprüche 1 bis 6, **dadurch gekennzeichnet, dass** die Messerklinge (7) auf der der Unterstützungsplatte (4) abgekehrten Seite eine Schneidwate (9) aufweist.

8. Befestigungsanordnung nach mindestens einem der Ansprüche 1 bis 6, **dadurch gekennzeichnet, dass** die Messerklinge (7) in ihrem freien Schneidbereich eine zur Unterstützungsplatte (4) gerichtete Umbiegung (11) aufweist und auf der der Unterstützungsplatte (4) zugekehrten Seite eine Schneidwate (9) aufweist.

9. Befestigungsanordnung nach mindestens einem der Ansprüche 1 bis 8, **dadurch gekennzeichnet, dass** die Messerklinge (7) in ihrem Schneidbereich eine Mehrzahl Schneidzähne (13) aufweist.

10. Befestigungsanordnung nach Anspruch 9, **dadurch gekennzeichnet, dass** die Schneidzähne (13) umgebogen ausgebildet sind.

11. Befestigungsanordnung nach mindestens einem der Ansprüche 1 bis 10, **dadurch gekennzeichnet, dass** die Messerklinge (7) ein oder mehrere Verstärkungsprägungen (14) aufweist.

## Claims

1. Arrangement for fixing a knife blade (7) to a mixing screw (1) of a feed mixer, including a plate (4) to support the knife blade (7), the plate being fixed to the rim (3) of the helix (2) of the mixing screw (1) with a plurality of screws (5) in a manner to avoid rotation, so that the plate protrudes radial in outward direction the rim (3) of the helix (2) of the mixing screw (1), **characterized in that** the knife blade (7) is exclusively fixed with at least one screw (8) to the region of the plate (4) protruding the rim (3) of the helix (2) of the mixing screw (1) in a manner to avoid rotation and **in that** the knife blade is designed and arranged with respect to the plate (4) on the same side as the rim (3) of the mixing screw (1) without increasing the thickness of the arrangement.

2. Arrangement of claim 1, **characterized in that** the knife blade (7) is designed and arranged as a segment.

3. Arrangement of claim 2, **characterized in that** the knife blade (7) being designed and arranged as a segment has a smaller thickness as the rim (3) of the mixing screw (1).

4. Arrangement of at least one of the claims 1 to 3, **characterized in that** the plate (4) on its side not facing the knife blade (7) includes an inclined surface (6).

5. Arrangement of at least one of the claims 1 to 4, **characterized in that** the knife blade (7) is exclusively fixed with a plurality of screws (8) to the plate (4) in a manner to avoid rotation.

6. Arrangement n of at least one of the claims 1 to 5, **characterized in that** the knife blade (7) being designed and arranged as a segment is designed and arranged being one or a number of pieces.

7. Arrangement of at least one of the claims 1 to 6, **characterized in that** the knife blade (7) has a cutting edge plane (9) designed and arranged on the side not facing the plate (4).

8. Arrangement of at least one of the claims 1 to 6, **characterized in that** the knife blade (7) includes a bending (11), the bending being arranged in the free cutting region of the knife blade and being directed towards the plate (4), and **in that** the knife blade (7) includes a cutting edge plane (9) on its side facing the plate (4).

9. Arrangement of at least one of the claims 1 to 8, **characterized in that** the knife blade (7) includes a plurality of cutting teeth (13) being arranged in the cutting region of the knife blade.

10. Arrangement of claim 9, **characterized in that** the knife teeth (13) have a bended shape.

11. Arrangement of at least one of the claims 1 to 10, **characterized in that** the knife blade (7) includes one or more reinforcing embosses (14).

## Revendications

1. Dispositif de fixation d'une lame de couteau (7) à une vis mélangeuse (1) d'un char mélangeur de nourriture, avec une plaque d'appui (4) soutenant la lame de couteau (7), qui est reliée fixe en rotation par plusieurs vis (5) au bord de la spirale (2) de la vis mélangeuse (1) de sorte qu'elle dépasse radialement vers l'extérieur au-delà du bord (3) de la spirale (2) de la vis mélangeuse (1), **caractérisé en ce que** la lame de couteau (7) est reliée exclusivement, par au moins une vis (8), sans possibilité de tourner, à la zone de la plaque d'appui (4) dépassant radialement vers l'extérieur au-delà du bord (3) de la spirale(2) et est disposée, sans augmentation de la hauteur de l'ensemble par rapport à la plaque d'appui (4), sur le même côté que le bord (3) de la vis mélangeuse (1).

2. Dispositif de fixation selon la revendication 1, **caractérisé en ce que** la lame de couteau (7) est constituée comme un segment.

3. Dispositif de fixation selon la revendication 2, **caractérisé en ce que** la lame de couteau (7) constituée comme un segment présente une épaisseur inférieure à celle du bord (3) de la vis mélangeuse (1).

4. Dispositif de fixation selon au moins l'une des revendications 1 à 3, **caractérisé en ce que** la plaque d'appui (4) présente un chanfrein (6) sur son côté tourné vers la lame de couteau (7).

5. Dispositif de fixation selon au moins l'une des revendications 1 à 4, **caractérisé en ce que** la lame de couteau (7) est reliée exclusivement, par plusieurs vis (8), sans possibilité de tourner, à la plaque d'appui (4).

6. Dispositif de fixation selon au moins l'une des revendications 1 à 5, **caractérisé en ce que** la lame de couteau (7) constituée comme un segment est d'une seule pièce ou en plusieurs pièces.

7. Dispositif de fixation selon au moins l'une des revendications 1 à 6, **caractérisé en ce que** la lame de couteau (7) présente un flanc de coupe (9) sur le côté opposé à la plaque d'appui (4).

8. Dispositif de fixation selon au moins l'une des revendications 1 à 6, **caractérisé en ce que** la lame de couteau (7) présente, dans sa zone libre de coupe, un replis (11) dirigé vers la plaque d'appui (4) et un flanc de coupe (9) sur le côté tourné vers la plaque d'appui (4).

9. Dispositif de fixation selon au moins l'une des revendications 1 à 8, **caractérisé en ce que** la lame de couteau (7) présente, dans sa zone de coupe, une pluralité de dents tranchantes (13).

10. Dispositif de fixation selon la revendication 9, **caractérisé en ce que** les dents tranchantes (13) sont formées avec une pliure.

11. Dispositif de fixation selon au moins l'une des revendications 1 à 10, **caractérisé en ce que** la lame de couteau (7) présent une ou plusieurs estampages de renforcement.
